# EUROPÄISCHE PATENTANMELDUNG

(11) **EP 1 265 095 A2**
(43) Veröffentlichungstag der Anmeldung: **11.12.2002**
(21) Anmeldenummer: 02011194.4
(22) Anmeldetag: 21.05.2002
(51) Int. Cl.: G02F 1/13, B60K 35/00

(54) **Flüssigkristallanzeige**

(30) Priorität: 07.06.2001 DE 10127491
(71) Anmelder: SIEMENS AKTIENGESELLSCHAFT, 80333 München (DE)
(72) Erfinder: Brandt, Peter, 63739 Aschaffenburg (DE); Simon, Ernst-Ulrich, 61440 Oberursel/Ts (DE)

(57) **Zusammenfassung**

Bei einer Flüssigkristall-Anzeige (1), insbesondere in einem Kraftfahrzeug, mit einer zwischen zwei LCD-Scheiben (2, 3) eingeschlossenen Flüssigkristallzelle überragt eine LCD-Scheibe (3) die andere LCD-Scheibe (2) allseitig mit einem Überstand (4). Ein Kontaktierungsteil (6) ist auf dem Überstand (4) durch Anlage an der anderen LCD-Scheibe (2) positioniert.

## Beschreibung

Die Erfindung betrifft eine Flüssigkristall-Anzeige, insbesondere in einem Kraftfahrzeug, mit einer zwischen zwei LCD-Scheiben eingeschlossenen Flüsisigkristallzelle, bei der eine LCD-Scheibe zur Kontaktierung einen Überstand mit Kontakten zur Steuerung der Flüssigkristallzelle aufweist, auf welchen ein Kontaktierungsteil sitzt.

Flüssigkristall-Anzeigen der vorstehenden Art werden beispielsweise in heutigen Kraftfahrzeugen eingesetzt und sind deshalb allgemein bekannt. Üblicherweise sind sie rechteckig oder quadratisch ausgebildet. Ihr Überstand befindet sich entlang einer oder mehrerer Seiten der Flüssigkristall-Anzeige, so dass dort die Kontaktierung durch das Kontaktierungsteil erfolgen kann.

Schwierigkeiten bereitet bei den heutigen Flüssigkristall-Anzeigen oftmals die Anordnung der aufgrund einer gewünschten, hohen Informationsdichte erforderlichen Anzahl von Kontakten auf dem Überstand. Bildet man den Überstand großflächig genug aus, um auf ihm die notwendigen Kontakte vorsehen zu können, dann treten Probleme hinsichtlich der genauen Positionierung des Kontaktteiles auf dem Überstand auf, da das Kontaktierungsteil in zwei Richtungen ausgerichtet werden muss.

Der Erfindung liegt das Problem zugrunde, eine Flüssigkristall-Anzeige der eingangs genannten Art so auszubilden, dass sich eine große Anzahl von Kontakten auf ihrem Überstand anordnen lässt und das Kontaktierungsteil möglichst genau und einfach auf diesen Kontakten positioniert werden kann.

Dieses Problem wird erfindungsgemäß dadurch gelöst, dass die eine LCD-Scheibe mit ihrem Überstand die andere LCD-Scheibe allseitig überragt und das Kontaktierungsteil auf dem Überstand durch Anlage an die Kontur der anderen LCD-Scheibe positioniert ist.

Durch einen solchen allseitigen Überstand ergibt sich eine große Fläche, auf der man die erforderlichen Kontakte mit einem großen Raster ohne Schwierigkeiten anordnen kann. Weiterhin ermöglicht es die großflächige Ausbildung, die Kontakte entsprechend großflächig und mit ausreichendem Abstand zueinander anzuordnen, so dass das Kontaktierungsteil nicht mit aus Fertigungsgründen unerwünscht großer Genauigkeit auf dem Überstand positioniert werden muss. Die Positionierung des Kontaktierungsteils an der Kontur der LCD-Scheibe führt dazu, dass das Kontaktierungsteil zwangsläufig richtig ausgerichtet ist, so dass nur noch seine Winkellage festzulegen ist.

Das Kontaktierungsteil wird besonders präzise ausgerichtet und vermag damit eine große Anzahl von Kontakten zu kontaktieren, wenn gemäß einer vorteilhaften Weiterbildung der Erfindung das Kontaktierungsteil einen geschlossenen Rahmen bildet, der zur Kontaktierung der Kontakte auf dem Überstand an der Außenkontur der zurückspringenden LCD-Scheibe geführt wird.

Den Designwünschen bei der Gestaltung von Anzeigen in Kraftfahrzeugen kommt es besonders entgegen, wenn die LCD-Scheiben kreisförmige Gestalt aufweisen. Hierdurch wird es beispielsweise möglich, ein Rundinstrument als LCD-Anzeige mit einem virtuellen Zeiger auszubilden. Weiterhin ist dieses eine platzsparende Ausführung.

Das Kontaktierungsteil lässt sich nur in einer vorgegebenen Winkellage auf dem Überstand aufbringen, so dass sich in allen Richtungen eine zwangsläufige Positionierung ergibt, wenn gemäß einer anderen Weiterbildung der Erfindung die LCD-Scheiben eine von der Rotationssymmetrie abweichende Außenkontur aufweisen.

Wenn die Zahl der Kontakte so gering ist, dass eine relativ kleine Kontaktfläche ausreicht, kann man auch vorsehen, dass das Kontaktierungsteil zur Kontaktierung der Kontakte auf dem Überstand eine der Kontur des Überstandes angepasste Ringsegmentfläche hat.

Die Kontaktierung der Flüssigkristall-Anzeige ist besonders kostengünstig herstellbar, wenn das Kontaktierungsteil als flexible Leiterplatte ausgebildet ist.

Die Herstellung der Flüssigkristall-Anzeige wird insbesondere vereinfacht und ihre Bauteileanzahl verringert, wenn gemäß einer anderen vorteilhaften Weiterbildung das Kontaktierungsteil und eine der LCD-Scheiben ein einziges Bauteil bildend - d. h. einstückig - miteinander verbunden sind. Somit wird ein Bauteil und eine Kontaktierung eingespart. Diese Ausführung bietet sich besonders an, wenn das Kontaktierungsteil als flexible Leiterplatte ausgebildet ist.

Die große Fläche des Überstandes und/oder des Kontaktierungsteils kann optimal genutzt werden, wenn gemäß einer anderen Weiterbildung der Erfindung auf dem Kontakierungsteil und/oder dem Überstand Treiber-IC's und/oder andere elektronische Bauteile angeordnet sind. Der Überstand bzw. das Kontaktierungsteil übernimmt bei einer solchen Ausführungsform die Funktion einer Leiterplatte.

Eine besonders große Anzahl von Kontakten kann auch mit einem kleinflächigen Kontaktierungsteil kontaktiert werden, wenn gemäß einer anderen Ausgestaltung der Erfindung das Kontaktierungsteil aus zumindest zwei leitfähigen Lagen besteht und zu den Leiterbahnen hin Durchkontaktierungen aufweist.

Eine Alternative zu einer Ausführung mit einer flexiblen Leiterplatte besteht darin, dass das Kontaktierungsteil durch einzelne Leitgummi-Elemente gebildet ist, welche in Kammern eines Displaygehäuses angeordnet sind und die einerseits gegen die Leiterbahnen des Überstandes anliegen, andererseits auf Kontakten einer Leiterplatte ruhen. Bei einer solchen Ausführungsform ist das die Kontaktierung ermöglichende, leitende Element in das Gehäuse der Flüssigkristall-Anzeige integriert.

Das Kontaktierungsteil kann vorteilhaft so ausgebildet werden, dass es zugleich zwei Flüssigkristall-Anzeigen zu kontaktieren vermag, indem es einen Anschlussabgang hat und zu beiden Seiten davon brillenartig jeweils einen Rahmen aufweist, der auf einem Überstand einer LCD-Scheibe einer Flüssigkristallzelle aufliegt.

Die Erfindung lässt verschiedene Ausführungsformen zu. Zur weiteren Verdeutlichung ihres Grundprinzips sind mehrere davon in der Zeichnung dargestellt und werden nachfolgend beschrieben. Diese zeigt in
- Fig.1: eine Draufsicht auf eine kreisförmige Flüssigkristall-Anzeige,
- Fig.2: eine Seitenansicht der Flüssigkristall-Anzeige,
- Fig.3: eine Draufsicht auf die Flüssigkristall-Anzeige nach der Figur 1 ohne Kontaktierungsteil,
- Fig.4: die Flüssigkristallanzeige nach den vorangegangenen Figuren mit einer zweiten Ausführungsform eines Kontaktierungsbauteils,
- Fig.5: eine dritte Ausführungsform eines Kontaktierungsbauteils,
- Fig.6: eine vierte Ausführungsform eines Kontaktierungsbauteils,
- Fig.7: einen Teilbereich einer weiteren Ausführungsform einer Flüssigkristall-Anzeige nach der Erfindung.

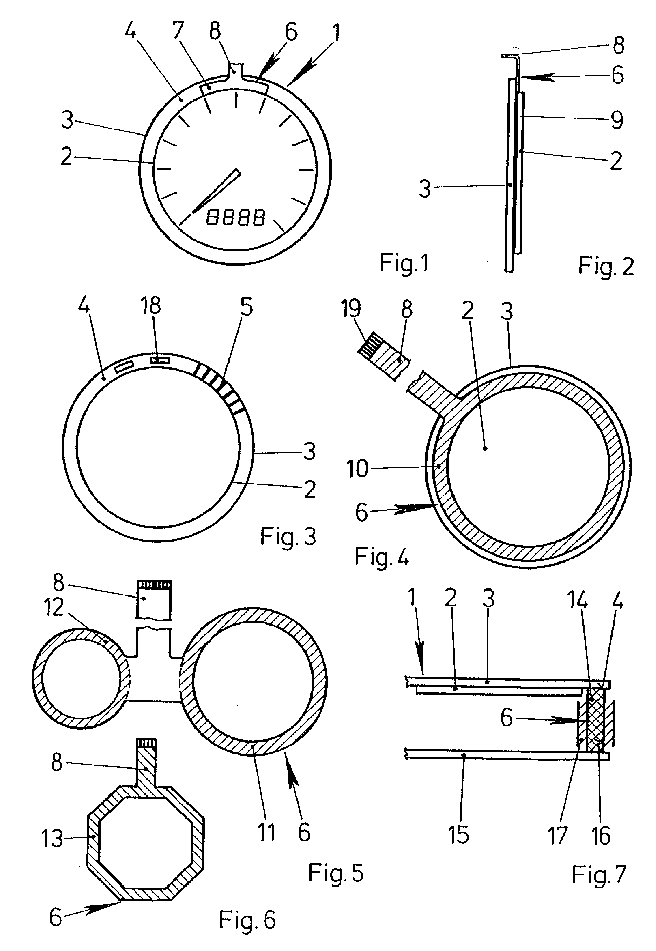

Die Figur 1 zeigt eine Flüssigkristallanzeige 1 kreisförmigen Querschnitts, welche koaxial zueinander eine obere LCD-Scheibe 2 und eine untere LCD-Scheibe 3 größeren Durchmessers aufweist. Beide LCD-Scheiben 2, 3 können aus Glas oder Kunststoff bestehen und starr oder flexibel sein. Der größere Durchmesser der unteren LCD-Scheibe 3 führt dazu, dass diese die obere LCD-Scheibe 2 mit einem Überstand 4 allseitig überragt.

Auf diesem Überstand 4 sind in der Figur 3 gezeigte Kontakte 5 angeordnet, welche zur Steuerung der Flüssigkristall-Anzeige 1 mit nicht gezeigten, in ihr Inneres führenden Leitern verbunden sind. Weiterhin können, was ebenfalls in Figur 3 zu sehen ist, auf dem Überstand 4 Treiber-IC's 18 oder andere elektronische Bauelemente positioniert werden.

Wie die Figur 1 zeigt, ist auf dem Überstand 4 ein Kontaktierungsteil 6 aufgesetzt, welches zur Kontaktierung der Kontakte 5 dient und hierzu eine Ringsegmentfläche 7 hat, von der ein Anschlussabgang 8 wegführt. Die Ringsegmentfläche 7 und damit das Kontaktierungsbauteil 6 liegt gegen die Außenkontur der oberen LCD-Scheibe 2 an. Das Kontaktierungsteil 6 ist vorzugsweise als flexible Leiterplatte, also als Folie ausgebildet. Es kann ebenfalls oder zusätzlich Treiber-ICs 18 oder elektronische Bauteile tragen.

Die Figur 2 zeigt, dass zwischen den beiden LCD-Scheiben 2, 3 eine Flüssigkristallzelle 9 gebildet ist. Weiterhin ist in Figur 2 das Kontaktierungsteil 6 mit dem Anschlussabgang 8 dargestellt.

Bei der Ausführungsform nach Figur 4 hat das Kontaktierungsteil 6 einen Rahmen 10, der wie eine Schlaufe die obere LCD-Scheibe 2 umschließt und deshalb von der Außenkontur der oberen LCD-Scheibe 2 positioniert wird. Weiterhin ist in Figur 4 der Anschlussabgang 8 mit Leitern 19 dargestellt, die zu einer nicht gezeigten Leiterplatte führen.

Bei der Ausführungsform nach Figur 5 ist das Kontaktierungsteil 6 brillenartig ausgebildet. Hierzu ist an jeder Seite des Anschlussabgangs 8 jeweils ein Rahmen 10, 12 angeordnet, der jeweils zur Kontaktierung einer in Figur 5 nicht gezeigten Flüssigkristall-Anzeige dient.

Die Figur 6 zeigt ein Kontaktierungsteil 6, welches einen als Achteck ausgebildeten Rahmen 13 hat und zur Auflage auf einen entsprechend geformten Überstand einer achteckigen Flüssigkristall-Anzeige dient.

In Figur 7 sieht man von einer weiteren Ausführungsform der Flüssigkristall-Anzeige 1 die beiden LCD-Scheiben 2, 3, wobei bei dieser Ausführungsform die obere LCD-Scheibe 3 zuoberst liegt und die andere LCD-Scheibe 2 mit dem Überstand 4 überragt. Dieser Überstand 4 stützt sich auf Leitgummi-Elementen 14 ab, die das Kontaktierungsteil 6 bilden und auf einer Leiterplatte 15 ruhen. Die einzelnen Leitgummi-Elemente 14 sind in Kammern 16 eines Displaygehäuses 17 angeordnet und stützen die Flüssigkristall-Anzeige 1 elastisch ab.

## Patentansprüche

1. Flüssigkristall-Anzeige, insbesondere in einem Kraftfahrzeug, mit einer zwischen zwei LCD-Scheiben eingeschlossenen Flüssigkristallzelle, bei der eine LCD-Scheibe zur Kontaktierung einen Überstand mit Kontakten zur Steuerung der Flüssigkristallzelle aufweist, auf welchen ein Kontaktierungsteil sitzt, **dadurch gekennzeichnet, dass** die eine LCD-Scheibe (3) mit ihrem Überstand (4) die andere LCD-Scheibe (2) allseitig überragt und das Kontaktierungsteil (6) auf dem Überstand (4) durch Anlage an die Kontur der anderen LCD-Scheibe (2) positioniert ist.

2. Flüssigkristall-Anzeige nach Anspruch 1, **dadurch gekennzeichnet, dass** das Kontaktierungsteil (6) einen geschlossenen Rahmen (10, 11, 12, 13) bildet, der zur Kontaktierung der Kontakte (5) auf dem Überstand (4) an der Außenkontur der zurückspringenden LCD-Scheibe (2) geführt wird.

3. Flüssigkristall-Anzeige nach Anspruch 1 oder 2, **dadurch gekennzeichnet, dass** die LCD-Scheiben (2, 3) kreisförmige Gestalt aufweisen.

4. Flüssigkristall-Anzeige nach zumindest einem der vorangehenden Ansprüche, **dadurch gekennzeichnet, dass** die LCD-Scheiben (2, 3) eine von der Rotationssymmetrie abweichende Außenkontur aufweisen.

5. Flüssigkristall-Anzeige nach zumindest einem der vorangehenden Ansprüche, **dadurch gekennzeichnet, dass** das Kontaktierungsteil (6) zur Kontaktierung der Kontakte (5) auf dem Überstand (4) eine der Kontur des Überstandes (4) angepasste Ringsegmentfläche (7) hat.

6. Flüssigkristall-Anzeige nach zumindest einem der vorangehenden Ansprüche, **dadurch gekennzeichnet, dass** das Kontaktierungsteil (6) als flexible Leiterplatte ausgebildet ist.

7. Flüssigkristall-Anzeige nach zumindest einem der vorangehenden Ansprüche, **dadurch gekennzeichnet, dass** das Kontaktierungsteil und eine der LCD-Scheiben ein einziges Bauteil bildend miteinander verbunden sind.

8. Flüssigkristall-Anzeige nach zumindest einem der vorangehenden Ansprüche, **dadurch gekennzeichnet, dass** auf dem Kontaktierungsteil (6) und/oder dem Überstand (4) Treiber-ICs (18) und/oder andere elektronische Bauteile angeordnet sind.

9. Flüssigkristall-Anzeige nach zumindest einem der vorangehenden Ansprüche, **dadurch gekennzeichnet, dass** das Kontaktierungsteil (6) aus zumindest zwei leitfähigen Lagen besteht und zu den Kontakten (5) hin Durchkontaktierungen aufweist.

10. Flüssigkristall-Anzeige nach zumindest einem der vorangehenden Ansprüche, **dadurch gekennzeichnet, dass** das Kontaktierungsteil (6) durch einzelne Leitgummi-Elemente (14) gebildet ist, welche in Kammern (16) eines Displaygehäuses (17) angeordnet sind und die einerseits gegen die Kontakte (5) des Überstandes (4) anliegen, andererseits auf Kontakten einer Leiterplatte (15) ruhen.

11. Flüssigkristall-Anzeige nach zumindest einem der vorangehenden Ansprüche, **dadurch gekennzeichnet, dass** das Kontaktierungsteil (6) einen Anschlussabgang (8) hat und zu beiden Seiten davon brillenartig jeweils einen Rahmen (11, 12) aufweist, der auf einem Überstand (4) einer LCD-Scheibe (3) einer Flüssigkristallzelle (1) aufliegt.
